**Europäisches Patentamt**

**European Patent Office**

**Office européen des brevets**

(19)

(11) Veröffentlichungsnummer : **0 394 832 B1**

(12)

# EUROPÄISCHE PATENTSCHRIFT

(45) Veröffentlichungstag der Patentschrift :
**25.03.92 Patentblatt 92/13**

(51) Int. Cl.⁵ : **F02F 1/38, F01L 1/04**

(21) Anmeldenummer : **90107401.3**

(22) Anmeldetag : **19.04.90**

(54) **Brennkraftmaschine mit zumindest einem Zylinderkopf und einem Zylinderblock.**

(30) Priorität : **28.04.89 DE 3914033**

(43) Veröffentlichungstag der Anmeldung :
**31.10.90 Patentblatt 90/44**

(45) Bekanntmachung des Hinweises auf die
Patenterteilung :
**25.03.92 Patentblatt 92/13**

(84) Benannte Vertragsstaaten :
**DE ES FR IT**

(56) Entgegenhaltungen :
**EP-A- 0 344 597**
**DE-A- 3 612 641**
**GB-A- 1 031 571**
**US-A- 2 853 063**
**US-A- 2 963 007**

(73) Patentinhaber : **VOLKSWAGEN**
**AKTIENGESELLSCHAFT**
**W-3180 Wolfsburg (DE)**

(72) Erfinder : **Schreiber, Klaus-Hagen**
**Hoftwete 1**
**W-3174 Meine (DE)**

EP 0 394 832 B1

## Beschreibung

Die Erfindung betrifft eine Brennkraftmaschine gemäß dem Oberbegriff des Patentanspruchs 1.

Die aus der DE-OS 26 34 333, F02f 1/24, bekannte Brennkraftmaschine dieses Aufbaus bietet die vorteilhafte Möglichkeit, dieselbe Maschinenkonstruktion unabhängig davon einzusetzen, ob das Einlaß- und das Auslaßsystem auf der linken oder rechten Seite der Kurbelwelle der Maschine angeordnet sind. Beim Übergang von der einen zur anderen Einbausituation wird lediglich der Zylinderkopf um eine senkrecht zur Verbindungsebene mit dem Zylinderblock verlaufende Achse verschwenkt, ohne daß irgendeine konstruktive Änderung oder gar ein Austausch des Zylinderkopfes erforderlich ist. Diese Konstruktion besitzt jedoch den Nachteil, daß bei der Verschwenkung des Zylinderkopfes auch der Antrieb der Ventilbetätigung, also üblicherweise eine Zahnriemenverbindung zwischen Kurbelwelle und Nockenwelle, seine Lage ändert. Dies wiederum setzt voraus, daß - wenn man nicht an beiden Stirnseiten der Maschine Einrichtungen zur Unterbringung eines derartigen Antriebs vorsehen will - bei Beibehalt des Antriebs auf derselben Stirnseite des Zylinderblocks zusätzliche Maßnahmen im Bereich des Zylinderkopfes getroffen werden müssen.

Der Erfindung liegt die Aufgabe zugrunde, eine gattungsgemäße Brennkraftmaschine zu schaffen, die unter Wahrung der Vorteile der beschriebenen Konstruktion Freiheit hinsichtlich des Ortes der Unterbringung des Antriebs für die Ventilbetätigung bietet.

Die erfindungsgemäße Lösung dieser Aufgabe besteht in den kennzeichnenden Merkmalen des Patentanspruchs 1, eine vorteilhafte Ausbildung der Erfindung ist Gegenstand des Unteranspruchs.

Bei der Erfindung erfolgt also beim Übergang von einer Einbausituation der Brennkraftmaschine in eine andere nicht eine Schwenkung des Zylinderkopfes in seiner Gesamtheit um eine senkrecht zur Verbindungsebene zwischen Zylinderkopf und Zylinderblock weisende Achse, sondern lediglich eine Schwenkung des die Gaswechselkanäle enthaltenden einen Kopfteils. Der andere Kopfteil, der die Ventilbetätigung, also im wesentlichen Nockenwelle und Kipphebel oder dergleichen, enthält, kann dagegen stets in derselben Ausrichtung bezüglich des Zylinderblocks angeordnet werden. Dies schließt jedoch nicht aus - und darin besteht ein weiterer Vorteil der Erfindung -, daß im Bedarfsfall beide Kopfteile, also letztlich der gesamte Zylinderkopf, verschwenkt werden können, um speziellen Einbaubedingungen Rechnung zu tragen.

An dieser Stelle sei eingefügt, daß die Unterteilung eines Zylinderkopfes in zwei Kopfteile grundsätzlich bekannt ist. In der EP 0 117 850 A1, F02F 1/24, ist zwischen dem eigentlichen Zylinderkopf und dem eigentlichen Zylinderblock eine Scheibe angeordnet, die jedoch lediglich einen Teil der Gaswechselkanäle aufnimmt, während weitere Gaswechselkanäle in dem anderen - oberen - Kopfteil untergebracht sind. Ziel der in dieser Druckschrift beschriebenen Maßnahmen ist auch nicht die Schaffung einer baukastenartig zusammengesetzten Brennkraftmaschine, deren Zylinderkopf zum Anbau in zwei Positionen eingerichtet ist, sondern die Möglichkeit einer Vergrößerung der Zahl der Ladungswechselventile.

Die prioritätsältere EP-A-0 344 597 (benannte Vertragsstaaten: DE, FR, IT) beschreibt eine Brennkraftmaschine mit einem Ladungswechselkanäle und Ventilbetätigungen enthaltenden Zylinderkopf und einem Zylinderblock, bei der der Zylinderkopf aus zumindest zwei übereinanderliegenden Kopfteilen zusammengesetzt ist, von denen einer den zylinderkopfseitigen Verbindungsbereich bildet und die Ladungswechselkanäle enthält, während der andere Kopfteil die Ventilbetätigungen enthält. Inwieweit hier den Übergang der beiden oben erwähnten Einbausituationen erleichternde symmetrische Verhältnisse vorliegen, bleibt offen.

Andere, aus dem DE-GM 18 94 505, 46c$^1$ 10, und der DE-PS 30 30 200, F02F 1/24, bekannte Konstruktionen mit zweiteiligem Zylinderkopf sind in den Verbindungsbereichen zwischen Zylinderkopf und Zylinderblock und/oder in den Verbindungszonen zwischen den beiden Kopfteilen nicht zu einer Längsachse symmetrisch ausgebildet, so daß eine Montage nur in einer bestimmten Ausrichtung möglich ist.

Wie bereits eben angesprochen, bietet die Erfindung die vorteilhafte Möglichkeit, eine Brennkraftmaschine bei allen Einbausituationen gleichsam baukastenartig aus drei Hauptbestandteilen, nämlich Zylinderblock und den beiden Kopfteilen, zusammenzusetzen, so daß sich also die Verwendung individueller Bauteile der genannten Art in Abhängigkeit von den jeweiligen Einbausituationen erübrigt. Dieser Vorteil der Erfindung geht so weit, daß auch bei V-Maschinen mit derart großem V-Winkel, daß zwei Zylinderköpfe erforderlich sind, die gleichen Kopfteile zur Gewinnung der Zylinderköpfe Einsatz finden können.

Die spiegelbildliche Ausbildung der Verbindungsbereiche und Verbindungszonen erstreckt sich verständlicherweise auch auf Kühl- und Schmiermittelkanäle, die bei beiden möglichen Relativlagen der Verbindungsbereiche und Verbindungszonen fluchten müssen.

Die Erfindung wird im folgenden anhand der Zeichnung erläutert, deren

Fig. 1 u. 2 schematisch Längsschnitte durch den Motorraum eines Kraftfahrzeugs zeigen, während

Fig. 3 eine Stirnansicht einer erfindungsgemäß ausgerüsteten V-Brennkraftmaschine wiedergibt.

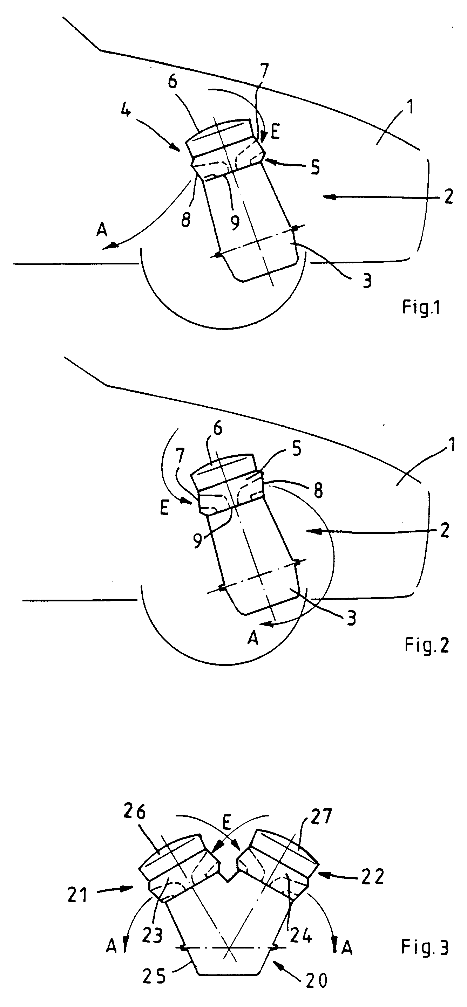

Betrachtet man zunächst Fig. 1, so erkennt man bei 1 den Motorraum eines Personenkraftwagens. Die quer eingebaute Brennkraftmaschine 2 enthält den Zylinderblock 3 sowie den Zylinderkopf 4, der aus den beiden Kopfteilen 5 und 6 zusammengesetzt ist. Während der Kopfteil 6 an sich bekannte Betätigungen (Nockenwelle, Kipphebel oder dergleichen) für Ladungswechselventile enthält, die bekannt sind und daher im einzelnen nicht beschrieben werden, nimmt der Kopfteil 5 Gaswechselkanäle auf, und zwar erstrecken sich die Einlaßkanäle in der Fig. 1 zugrundeliegenden Einbausituation der Maschine 2 zu der in Fig. 1 rechten Seitenwand 7 des Kopfteils 5, wo sie mit dem einen bekannten Aufbau besitzenden, bei E angedeuteten Einlaßsystem verbunden sind, während die Auslaßkanäle in die andere Seitenwand 8 des Kopfteils 5 einmünden, an die das übliche Auslaßsystem A der Maschine angeschlossen ist.

Wie Fig. 1 deutlich zeigt, besitzt das Kopfteil 5 eine parallelogrammähnliche Querschnittsform, und zwar sind die Parallelogrammwinkel so gewählt, daß die Seitenwand 7 mit der Trennebene 9 zwischen Zylinderkopf und Zylinderblock einen Winkel einschließt, der kleiner als 90° ist, während die andere Seitenwand 8 mit der Ebene 9 einen Winkel einschließt, der entsprechend größer als 90° ist. Dadurch wird die Möglichkeit gegeben, ein nach unten weisendes Auslaßsystem A und ein von oben kommendes Einlaßsystem E an den Kopfteil 5 anzuschließen.

In der Ausführungsform nach Fig. 2 ist das Einlaßsystem E in der Figur von links, also bezüglich des Fahrzeugs 1 von hinten, dagegen das Auslaßsystem A von rechts bzw. von vorn her an den bereits anhand Fig. 1 beschriebenen Kopfbereich 5 angeschlossen, der gegenüber seiner Lage in Fig. 1 jedoch um eine senkrechte Achse um 180° verschwenkt ist. Man erkennt dies an der seitenvertauschten Position seiner Seitenwände 7 und 8. Der Kopfbereich 6 hat dagegen seine Lage relativ zum Zylinderblock 3 beibehalten. Soll dagegen auch der Antrieb für die Ventilbetätigung verlegt werden, also beispielsweise von der in Fig. 1 nach hinten weisenden Stirnseite der Maschine auf die in Fig. 2 nach vorn weisende Stirnseite, so muß auch der Kopfteil 6 um 180° verschwenkt werden.

Fig. 3 zeigt eine Brennkraftmaschine 20 in V-Bauweise, wobei der V-Winkel so groß ist, daß zwei Zylinderköpfe 21 und 22 vorhanden sind. Jeder dieser Zylinderköpfe besteht aus zwei Kopfteilen, nämlich einem Kopfteil 23 bzw. 24 unmittelbar auf dem Zylinderblock 25 und 26 bzw. 27, die den oberen Abschluß des jeweiligen Zylinderkopfes 21 bzw. 22 bilden. Während die Kopfteile 23 und 24 wiederum die Gaswechselkanäle aufnehmen, enthalten die Kopfteile 26 und 27 die Ventilbetätigungen. Entscheidend ist nun, daß die Kopfteile 23 und 24 sowie 26 und 27 jeweils untereinander gleich sind, obwohl das Einlaßsystem E und das Auslaßsystem A an entgegengesetzte Seitenwände der Kopfteile 23 und 24 angeschlossen sind.

Mit der Erfindung ist demgemäß eine gattungsgemäße Brennkraftmaschine geschaffen, die durch baukastenartigen Aufbau unter Verwendung gleicher Hauptbestandteile an unterschiedliche Einbausituationen angepaßt werden kann. Der unmittelbar mit dem Zylinderblock verbundene Kopfteil kann für Otto- und Dieselmaschinen ohne Änderung verwendet werden, wenn eine Aufnahme für die Zündkerze als Aufnahme für eine Kraftstoff-Einspritzdüse verwendet wird.

## Patentansprüche

1. Brennkraftmaschine, insbesondere Antriebsmaschine für ein Kraftfahrzeug, mit zumindest einem Ladungswechselkanäle und Ventilbetätigungen enthaltenden Zylinderkopf und einem Zylinderblock, wobei aneinandergrenzende Verbindungsbereiche von Zylinderkopf und Zylinderblock bezüglich einer Längsachse der Maschine zur Schaffung von zwei möglichen, um 180° versetzten Relativlagen der Verbindungsbereiche spiegelbildlich ausgebildet sind, dadurch gekennzeichnet, daß der Zylinderkopf (4) aus zumindest zwei übereinanderliegenden Kopfteilen (5, 6) zusammengesetzt ist, von denen einer (5) den zylinderkopfseitigen Verbindungsbereich bildet und die Ladungswechselkanäle enthält, während der andere (6) der beiden Kopfteile (5, 6) die Ventilbetätigungen enthält, und einander zugekehrte Verbindungszonen dieser Kopfteile (5, 6) ebenfalls spiegelbildlich zu der Längsachse ausgebildet sind.

2. Brennkraftmaschine nach Anspruch 1, dadurch gekennzeichnet, daß die dem Einlaß und die dem Auslaß dienenden Ladungswechselkanäle zu entgegengesetzten Seitenwänden (7, 8) des einen Kopfteils (5) geführt sind und dieser einen parallelogrammähnlichen querschnitt besitzt.

## Claims

1. An internal combustion engine, particularly a drive engine for a motor vehicle, having at least one cylinder head containing passages for changing the charge and valve actuating means, and a cylinder block, adjoining connection regions of cylinder head and cylinder block being of mirror-image construction with respect to a longitudinal axis of the engine for the purpose of creating two possible relative positions, staggered through 180°, of the connection regions characterised in that the cylinder head (4) is assembled from at least two head portions (5, 6) which are located one above the other and one (5) of which forms the connection region on the cylinder head side and contains the passages, while the other (6) of the two head portions (5, 6) contains the valve actuating means, and mutually facing connections zones of these head portions (5, 6) are also of mirror-image construction relative to the longitudinal axis.

2. An internal combustion engine as claimed in claim 1, characterised in that the passages serving for the inlet and the outlet are guided to opposite side walls (7, 8) of one (5) of the head portions and the head portion (5) has a parallelogram-like cross section.

## Revendications

1. Moteur à combustion interne, notamment moteur de propulsion d'une automobile, comprenant au moins une culasse contenant des canalisations de mouvement des gaz et des dispositifs de commande des soupapes et un bloc-cylindres, des parties adjacentes de raccordement de la culasse et du bloc-cylindres étant réalisées de façon symétrique en miroir par rapport à un axe longitudinal du moteur, de façon à créer deux positions relatives possibles des parties de raccordement, ces positions relatives étant décalées de 180° l'une par rapport à l'autre, caractérisé en ce que la culasse (4) est constituée d'au moins deux parties superposées (5, 6) de culasse, l'une (5) des deux parties formant la partie de raccordement de la culasse et contenant les canalisations le mouvement des gaz, alors que la seconde (6) des deux parties (5, 6) de la culasse contient les dispositifs de commande des soupapes, et en ce que des zones de raccordement en vis-à-vis des parties (5, 6) de culasse sont également réalisées de façon symétrique en miroir par rapport à l'axe longitudinal.

2. Moteur à combustion interne selon la revendication 1, caractérisé en ce que les canalisations de mouvement des gaz, qui sont destinées à l'admission et à l'échappement, se dirigent vers des parois latérales opposées (7, 8) de l'une (5) des parties de la culasse, et en ce que celle-ci possède une section en forme de parallélogramme.

Fig.1

Fig.2

Fig.3